# EUROPÄISCHE PATENTSCHRIFT

(11) **EP 3 593 895 B1**
(45) Veröffentlichungstag und Bekanntmachung des Hinweises auf die Patenterteilung: **30.08.2023**
(21) Anmeldenummer: 19181618.0
(22) Anmeldetag: 21.06.2019
(51) Int. Cl.: B01D 65/02, B01D 61/22, C02F 1/68

(54) **VERFAHREN ZUR OPTIMIERUNG DER PRODUKTIONSSICHERHEIT VON MEMBRANANLAGEN**
METHOD FOR OPTIMISING PRODUCTION RELIABILITY FOR MEMBRANE SYSTEMS
PROCÉDÉ D'OPTIMISATION DE LA SÉCURISATION DE PRODUCTION DES INSTALLATIONS À MEMBRANE

(30) Priorität: 12.07.2018 CH 8622018
(43) Veröffentlichungstag der Anmeldung: 15.01.2020
(73) Patentinhaber: Halag Chemie AG, 8355 Aadorf (CH)
(72) Erfinder: Schenk, Martin, 8355 Aadorf (CH); Muerner, Hansruedi, 9552 Bronschhofen (CH); Messinger, Alain, 8038 Zürich (CH); Alho, Eric, 8050 Zürich (CH)
(74) Vertreter: Hepp Wenger Ryffel AG

(56) Entgegenhaltungen:
- EP-A1- 2 497 750
- WO-A1-2013/089126
- WO-A1-2013/134180
- WO-A1-2017/046214
- US-A1- 2009 045 144
- US-A1- 2010 332 149
- US-A1- 2017 209 834
- US-A1- 2017 297 929
- US-A1- 2018 015 418
- Bvl: "BVL - Trinkwasser - Wasser - Das Grundnahrungsmittel Nummer eins", , 21 February 2023 (2023-02-21), pages 1-2, XP093025919, Retrieved from the Internet: URL:https://www.bvl.bund.de/DE/Arbeitsbere iche/01_Lebensmittel/03_Verbraucher/15_Was ser_Mineralwasser/01_Trinkwasser/Trinkwass er_basepage.html [retrieved on 2023-02-21]
- Kimberlee Burrington: "Milk Fractionation Techniques Basics of Milk Composition", , 1 January 2013 (2013-01-01), pages 1-8, XP055213017, Retrieved from the Internet: URL:http://www.usdairy.com/~/media/usd/pub lic/technicalreportmilkfractionationtechno logy.pdf.pdf [retrieved on 2015-09-14]

## Beschreibung

Die vorliegende Erfindung betrifft ein Verfahren zur Optimierung der Produktionssicherheit einer membran-basierten Vorrichtung zur Filtration eines Mediums.

Bei zahlreichen Prozessen ist es erforderlich, gewisse Komponenten (beispielsweise Verunreinigungen, Bakterien oder auch Inhaltsstoffe wie Fette oder Proteine) vom Rohprodukt (Medium) abzutrennen. Ein übliches Trennverfahren ist die Filtration.

Filtrationsverfahren sind hinlänglich bekannt. Grundsätzlich wird ein in Bestandteile zu zerlegendes Medium durch eine Membran geführt, d.h. durch eine Schicht, welche nur für einen Teil des Mediums durchlässig (permeabel) ist, einen anderen Teil des Mediums aber zurückhält.

Die Membran wird bei der Filtration durch die Komponenten kontaminiert, welche von der Membran zurückgehalten werden. Dies kann zu mehreren unerwünschten Konsequenzen führen: Einerseits kann es zu einer Beeinträchtigung der Durchlässigkeit der Membran kommen (durch Verstopfung von Poren in der Membran oder durch Ausbildung einer undurchlässigen Schicht auf der Membran, auch als fouling bezeichnet), was zu einer erheblichen Beeinträchtigung des gesamten Filtrationsprozesses führen kann. Andererseits können Rückstände auf der Membran Umwandlungsprozessen unterworfen sein, welche ihrerseits zu einer Verstopfung der Membran und sogar zu einer mikrobiologischen Aufkonzentrierung und somit Kontamination des zu trennenden Mediums führen können.

Letzteres ist insbesondere bei der Veredlung von natürlichen Nahrungsmitteln durch Gewinnung/Abtrennung molekularer Bestandteile ein Problem. Die zur Herstellung solcher Nahrungsmittel eingesetzten Rohstoffe (z.B. Magermilch/Molke, etc.) enthalten üblicherweise organische Substanzen wie Proteine, welche auf der Membran eine Gelschicht ausbilden oder bei Anwesenheit von Bakterien einen Fäulnisprozess (biofouling) unterstützen können. Als Konsequenz kann es während des laufenden Betriebs der Nahrungsmittelherstellung zur Ausbildung eines Bakterienbewuchses auf der Membran kommen, mit den vorstehend beschriebenen nachteiligen Folgen.

Um den zur Wahrung der Lebensmittelsicherheit/Hygiene unumgänglichen Prozessschritt der Reinigung, im Verhältnis zur Produktionszeit, so kurz und effizient wie möglich zu gestalten, wurde vorgeschlagen, anstelle einer regelmässigen, Zeit- bzw. Gesamtvolumenstrom (vom zu filtrierenden Medium) abhängigen, konventionellen, zeitaufwendigen Reinigungsprozedur und Spülung der Membran (der Betrieb wird unterbrochen, und die Membran wird mit Medium gespült, um anhaftende Komponenten zu entfernen) die Reinigung gezielter durch Bestimmung des Kontaminierungsgrades der Membran und gezieltem, variablem Einsatz von Reinigungsmitteln und Additiven durchzuführen. Diese Massnahme ist jedoch mit Problemen behaftet:
Bei diesem sogenannten CIP-Verfahren (Cleaning in Place, definiert als Reinigung am Platz im Kreislauf, ohne Demontage von Anlagenbauteilen) wird der Kontaminierungsgrad einer Membran aufgrund ihrer Filtrationsleistung abgeschätzt und darauf basierend in einem Reinigungsprozess (der laufende Betrieb wird unterbrochen, die Anlage gespült, entleert, und anschliessend wird Reinigungsmittel durch die Anlage geführt) ein erfahrungsgemäss festgelegtes Reinigungsmittel eingesetzt.

Abhängig vom zu trennenden Medium und den gewünschten, zu gewinnenden Einzelkomponenten ist jedoch jeder Filtrationsprozess mit unterschiedlichen Fouling-Problemen verbunden, welche durch das spezifische aufzutrennende Medium und die spezifischen Prozessbedingungen (gewünschte Eigenschaften des gewonnenen Permeats) hervorgerufen werden. Es gibt daher keine nachhaltigen Erfolg versprechende, allgemein anwendbare Reinigungsmittel. Für jedes Verfahren muss eine optimale Kombination von Reinigungskomponenten ermittelt werden, d.h. nur so viel wie nötig und trotzdem Gewährleistung einer hohen Produktsicherheit.

Weiterhin besteht das Problem, dass die Wirksamkeit bzw. Konzentration eines Reinigungsmittels oder einer Kombination von Reinigungsmitteln in einem spezifischen Reinigungsprozess während des laufenden Betriebs nur schwer kontrolliert werden kann. Eine visuelle Inspektion der Membran ist in der Regel während des laufenden Betriebs nicht möglich, sodass die Wirksamkeit einer Reinigungsmassnahme nur limitiert aufgrund der Filtrationsleistung abgeschätzt werden kann. Eine Anpassung des Reinigungsmittels in Abhängigkeit des erzielten Reinigungsergebnisses findet im CIP-Verfahren nicht statt.

Die vorstehende Problematik wird durch die Anforderungen an ein effizientes industrielles Verfahren verstärkt. Um optimale Produktionszeiten mit möglichst wenig (Reinigungs-) Unterbrechungen sowie eine hohe Produktsicherheit und eine schonendere Verfahrensführung bei niedrigeren Temperaturen (was einerseits die Membran schont, andererseits aber das Risiko eines Bakterienbewuchses erhöht) zu ermöglichen, ist es umso wichtiger, die richtigen Reinigungsmittel in der richtigen Dosierung zum richtigen Zeitpunkt zuzugeben. Dies ist ein herausforderndes Unterfangen.

In der WO 2013/134180 A1 ist ein Verfahren zur Behandlung industrieller Wassersysteme beschrieben, bei welchem hierfür erforderliche Additive "on-site" bereitgestellt werden sollen. Basierend auf einem erhobenen Messwert wird vor Ort aus den einzelnen Komponenten ein Additivgemisch hergestellt und in die Anlage zur Behandlung industrieller Wassersysteme eingeführt. Es werden keine näheren Angaben zur Art der Erhebung der Messwerte aus der Anlage gemacht. Der Fokus dieser Anmeldung liegt auf der spezifischen Art der kontrollierten Abgabe von Additiven in das System.

Verfahren zur Behandlung industrieller Wassersysteme sind unterschiedlich von Verfahren zur Herstellung von Nahrungsmitteln. Membransysteme sind in der WO 2013/134180 A1 zwar allgemein in einer längeren Liste an möglichen System erwähnt, aber es fehlen Ausführungen dahingehend, ob und wie eine Kontaminierung von Membranen überwacht und behoben werden soll. Es wird nicht beschrieben, dass erhobene Daten zur sogfältigen Auswertung und Analyse des Betriebszustands der Anlage an einen externen Server übergeben und dort auf besondere Weise analysiert werden sollen. Das Verfahren aus dem Stand der Technik ist nicht für die Optimierung der Produktionssicherheit einer Anlage zur Herstellung von Nahrungsmitteln vorgesehen.

Es war die Aufgabe der vorliegenden Erfindung, ein Verfahren zur Optimierung der Produktionssicherheit einer membran-basierten Vorrichtung zur Filtration eines Mediums bereitzustellen, das den hohen Anforderungen an die Herstellung von Nahrungsmitteln genügt.

Die vorstehende Aufgabe wird durch das Verfahren gemäss Anspruch 1 gelöst. Die vorliegende Erfindung betrifft ein Verfahren zur Optimierung der Produktionssicherheit einer membran-basierten Vorrichtung zur Filtration eines Mediums zur Herstellung von Milchprodukten, wobei das Medium ein Rohprodukt ist, aus welchem das Milchprodukt erhalten wird, umfassend die Schritte:
a) Entnahme einer Probe des in der Vorrichtung befindlichen Mediums zur Herstellung von Milchprodukten wie Milch, Quark, Käse, Joghurt, Hüttenkäse, Ricotta, Milchprotein, Milchprotein-Hydrolysat, Milchprotein-Konzentrat, Molkeprotein, oder Lactoseprotein, wobei das Milchprodukt durch Auftrennung des Mediums erhalten wird;
b) Bestimmung mindestens eines für die Optimierung der Produktionssicherheit der Vorrichtung wesentlichen Parameters;
c) Übermittlung der in Schritt b) erhaltenen Ergebnisse an einen externen Server, welcher in einem Gebäude ausserhalb der Fabrikanlage, in welcher die Vorrichtung steht, positioniert ist;
d) Auswertung der Ergebnisse durch den externen Server;
e) Gegebenenfalls Ausführung einer Aktion auf der Basis der Auswertung in Schritt d), wobei das Verfahren kontinuierlich während des Betriebs der Vorrichtung durchgeführt wird und im Fall einer Aktion der Betrieb unterbrochen, die Vorrichtung entleert und die Aktion durchgeführt wird, wobei die Aktion umfasst, dass mindestens ein Additiv in die Vorrichtung eingeführt wird.

Unter einer membran-basierten Vorrichtung zur Filtration eines Mediums wird eine Vorrichtung verstanden, mit welcher ein Medium mit Hilfe mindestens einer Membran, je nach Anforderung auch mehreren Membranen, beispielsweise 3 bis 10 Membranen, und in Abhängigkeit vom angewendeten Trennungsverfahren auch in mehreren, z.B. bis zu 3 Filtrationsstufen, in Reihe oder parallel geschaltet, filtriert wird.

Erfindungsgemäss ist das in Einzelkomponenten zu trennende Medium flüssig. Hierunter sind auch Mischsysteme mit mindestens einer flüssigen Phase, wie Dispersionen und Emulsionen, zu verstehen.

Erfindungsgemäss ist unter einer Optimierung der Produktionssicherheit eine Überwachung des Betriebs, beinhaltend die Instandhaltung (die Reinigung und Pflege), einer membran-basierten Vorrichtung zur Filtration eines Mediums zu verstehen.

Unter "Reinigung" ist hierbei eine Reinigung der Vorrichtung in einem separaten Reinigungsschritt aufgrund einer kontinuierlichen Überwachung während laufenden Betriebs zu verstehen. Erfindungsgemäss wird der Reinigungsschritt gezielter ausgelöst als in einem herkömmlichen CIP-Verfahren. Gezielter bedeutet hier explizit, dass die Reinigung (bei durch die Erfindung festgestellter Notwendigkeit) früher als konventionell, oder aber auch später (bei noch nicht festgestelltem Erreichen einer Verschmutzungsschwelle (Fouling)) durchgeführt wird. Eine Konsequenz hieraus ist, dass eine umfangreiche, zeitaufwändige Reinigung bei kontinuierlicher Anwendung des erfindungsgemässen Verfahrens nicht erforderlich, beziehungsweise reduzierbar sein sollte.

Unter "Pflege" soll verstanden werden, dass mit dem erfindungsgemässen Verfahren eine Verfahrensführung ermöglicht wird, durch welche die mindestens eine Membran mindestens einer Filtrationsstufe in der Vorrichtung möglichst wenig durch Kontamination belastet wird, frühzeitig gereinigt/gepflegt werden kann, und durch diese schonende Behandlung eine durchschnittliche längere Lebensdauer aufweist als in Vorrichtungen, die nicht mit dem erfindungsgemässen Verfahren betrieben werden.

Erfindungsgemäss sollen mit dem beschriebenen Verfahren Vorrichtungen betrieben werden, welche zur Herstellung von Milchprodukten vorgesehen sind. Beispielhaft genannt seien Vorrichtungen zur Herstellung von Milchprodukten wie Milch, Quark, Käse, Joghurt, Hüttenkäse, Ricotta, Milchprotein, Milchprotein-Hydrolysat, Milchprotein-Konzentrat, Molkeprotein, oder Lactoseprotein.

Vorrichtungen für die vorstehend beschriebenen Zwecke sind hinlänglich bekannt und müssen hier nicht im Detail beschrieben werden. Die erfindungsgemäss zu betreibenden Vorrichtungen sind dadurch gekennzeichnet, dass in ihnen mindestens eine Filtrationsstufe unter Einsatz einer Membran durchgeführt wird. Erfindungsgemäss kann hierbei jede herkömmlich in diesem Bereich eingesetzte Membran gereinigt und gepflegt werden.

Das erfindungsgemäss Verfahren kann schnell und ohne grosse Umbaumassnahmen bei jeder der vorstehend genannten membran-basierten Vorrichtungen implementiert werden. Dies ist insbesondere dann der Fall, wenn das erfindungsgemässe Verfahren besonders bevorzugt auf dem Prinzip eines "ex situ"-Monitoring basiert. Darunter soll verstanden werden, dass mit Ausnahme des Schritts einer Probenentnahme aus der Vorrichtung sämtliche anderen erfindungsgemässen Verfahrensschritte bis zur gegebenenfalls erforderlichen Injektion von Reinigungsmitteln/Additiven in die Vorrichtung ausserhalb der Vorrichtung durchgeführt werden.

In einem ersten Verfahrensschritt a) erfolgt eine Entnahme einer Probe des in der Vorrichtung befindlichen Mediums. Vorzugsweise wird die Probe in Schritt a) in situ entnommen, d.h. direkt aus der in Betrieb befindlichen Vorrichtung.

Die Probenentnahme kann an verschiedenen Orten der Vorrichtung auf übliche Weise erfolgen. Der geeignetste Ort für die Probenentnahme kann abhängig von der Vorrichtung und dem darin betriebenen Verfahren variieren. Bevorzugt ist üblicherweise eine Probenentnahme an Stellen, welche an das Trennungsverfahren, die Vorrichtung und die Produktanforderungen angepasst sind und somit die Bedingungen an der oder den Membranen möglichst genau evaluieren zu können. Besonders bevorzugt erfolgt die Probenentnahme stromaufwärts und stromabwärts mindestens einer, insbesondere bevorzugt jeder, in der Vorrichtung befindlichen Membranstufe. Für den Fall einer Anlage mit mehreren Trennstufen erfolgt die Probenentnahme somit vorzugsweise zwischen den einzelnen Trennstufen.

Die Probenentnahme kann auf übliche Art erfolgen, beispielsweise durch Bereitstellung einer Auslassöffnung an der gewünschten Stelle der Vorrichtung. Typischerweise ist die zu reinigende und pflegende Membran in einem rohrförmigen Abschnitt der Vorrichtung angeordnet und wird von dem zu filtrierenden Medium durchströmt. Man kann beispielsweise eine Öffnung in dem Rohr bereitstellen, vorzugsweise in einem Abschnitt in der Nähe der Position der Membran.

Diese Öffnung kann durch einen Verschlussmechanismus, beispielsweise ein Ventil, geöffnet und verschlossen werden.

Erfindungsgemäss bevorzugt erfolgt das Öffnen und Schliessen des Verschlussmechanismus automatisch zu festgelegten Zeiten (beispielsweise mit Hilfe einer bekannten Steuerungssoftware), um wie nachstehend ausgeführt eine Regelung des Betriebs der Vorrichtung zu erreichen.

Gemäss einer alternativen Ausführungsform der vorliegenden Erfindung kann die Entnahme aber auch kontinuierlich erfolgen. Bei dieser Variante ist ein Verschlussmechanismus am vorstehend beschriebenen Probenauslass der Vorrichtung prinzipiell entbehrlich, aber dennoch sinnvoll, um ein gegebenenfalls erforderliches Verschliessen der Vorrichtung zu ermöglichen.

Am von der Vorrichtung abgewandten Ausgang der Probenentnahmestelle kann entweder eine Sammeleinheit zur Entnahme der Probe (ein Behälter wie ein Becken) oder vorzugsweise eine Leitung wie ein Rohr angeordnet sein, durch welche die entnommene Probe einer Einheit zur Bestimmung mindestens eines für die Optimierung der Produktionssicherheit der Vorrichtung wesentlichen Parameters zugeführt werden kann.

Diese Einheit zur Bestimmung mindestens eines für die Optimierung der Produktionssicherheit der Vorrichtung wesentlichen Parameters ist erfindungsgemäss bevorzugt ausserhalb der Vorrichtung angeordnet. Dies hat den vorstehend genannten Vorteil der einfachen Umrüstbarkeit der entsprechenden Vorrichtung, da die Einheit nicht direkt in die Vorrichtung integriert werden muss.

Erfindungsgemäss bevorzugt handelt es sich bei der Einheit zur Bestimmung mindestens eines für die Optimierung der Produktionssicherheit der Vorrichtung wesentlichen Parameters um eine sogenannte Sensoreinheit. Eine Sensoreinheit ist eine Einheit, welche einen oder mehrere Sensoren und eine Komponente zur Erfassung von Signalen, welche von dem mindestens einen Sensor erzeugt werden, umfasst.

Sensoren zur Erfassung von für die Optimierung der Produktionssicherheit der Vorrichtung wesentlichen Parametern sind hinlänglich bekannt und müssen hier nicht weiter diskutiert werden. Erfindungsgemäss bevorzugt sind Sensoren, welche eine photometrische Bestimmung einer Probe, eine Bestimmung des pH-Werts (z.B. pH Probe von Atlas-Scientific), der Temperatur (z.B. Platin RTD (Pt-100) von Play-Zone AG) oder der Leitfähigkeit (z.B. EC Probe) einer Probe oder eine UV-spektroskopische Bestimmung der Probe ermöglichen. Zu diesem Zweck wird dem entsprechenden Sensor eine bestimmte Probenmenge zugeführt und dem jeweiligen Analyseverfahren unterworfen. Erfindungsgemäss üblich ist eine Probenmenge im Bereich von 10 bis 500 ml, vorzugsweise 50 bis 300 ml und besonders bevorzugt 75 bis 200 ml. Im Fall einer kontinuierlichen Probenentnahme beträgt die dem mindestens einen Sensor zugeführte Probenmenge vorzugsweise 10 bis 500 ml/min, vorzugsweise 50 bis 300 ml/min und besonders bevorzugt 75 bis 200 ml/min.

Gemäss spezifischer Ausführungsformen der vorliegenden Erfindung kann die entnommene Probe nacheinander durch mehrere seriell angeordnete Sensoren geführt oder vorgängig aufgeteilt und durch parallel angeordnete Sensoren geführt werden.

Nach Durchlaufen der Sensoren wird die entnommene Probe erfindungsgemäss aus mikrobiologischen Gründen nicht mehr dem Medium zugeführt, sondern entsorgt.

Das oder die von dem mindestens einen Sensor erzeugten Signale sind elektrische Signale, vorzugsweise unterschiedliche Spannungen, und entsprechen den zu messenden Parametern. Üblicherweise erzeugen handelsübliche Sensoren normierte Signale. Diese Signale werden durch elektrische Leitungen der Komponente zur Erfassung von Signalen zugeführt. Diese Komponente erfasst mit Hilfe einer Software, welche auf einem integrierten Prozessor läuft, die von dem oder den Sensoren erzeugten Signale und leitet diese an einen externen Server weiter. Es handelt sich bei der Komponente vorzugsweise um ein herkömmliches Computersystem, mit spezieller Software zur Erfassung der vorstehend beschriebenen Signale mit entsprechenden herkömmlichen Bauteilen wie beispielsweise erforderlichen Eingangs- und Ausgangsanschlüssen (Stromversorgung, USB-Anschlüsse, gegebenenfalls Monitor- und Druckeranschlüsse) .

Vorzugsweise umfasst die Komponente eine lokale Speichereinheit zur Zwischenspeicherung erfasster Signale.

Erfindungsgemäss bevorzugt sind der oder die Sensoren und die Komponente zur Erfassung von Signalen aus dem oder den Sensoren in einer einzigen Einheit angeordnet, beispielsweise in einem entsprechend dimensionierten Behälter.

Derartige Komponenten/Einheiten sind bekannt. Beispielsweise sei auf die Systeme "3D Trasar" von Nalco, "Insight" von GE oder auf die "Halag Box" von der Halag Chemie AG verwiesen.

Erfindungsgemäss bevorzugt ist die Halag-Box, welche Daten von allen herkömmlichen Sensoren erfassen kann. Die Halag-Box ist zudem speziell entsprechend den Anforderungen in der Lebensmittelindustrie konstruiert. Das Gehäuse der Halag-Box erfüllt die Anforderungen der Schutzklasse IP67 (d.h. das Gehäuse ist staubdicht und für einen bestimmten Zeitraum wasserdicht); gleiches trifft auf die Kabeldurchführungen zu.

Die Halag-Box enthält einen "embedded Linux"-Rechner, d.h. einen Rechner mit einem auf Linux als Programmiersprache basierenden Betriebssystem. Die Halag-Box kann auch mit einem externen Computer (PC, Apple Macintosh, Aruino, Rasperry P usw.) gesteuert werden, indem dieser an die USB-Schnittstelle der Halag-Box angeschlossen wird. Auf diese Weise kann die Halag-Box effizient mit kundenspezifischer Software betrieben werden. Die Halag-Box kann Hunderte von Analog- und Digital-Signalen verarbeiten und ist daher für die Optimierung der Produktionssicherheit gängiger membran-basierten Vorrichtungen zur Filtration eines Mediums geeignet.

Gemäss der erfindungsgemäss bevorzugten Variante kann auf einfache Weise die vorstehend beschriebene Sensoreinheit oder Komponente davon ausgewechselt werden, da sich diese ausserhalb der zu überwachenden Vorrichtung befindet.

Die derart von der Sensoreinheit erfassten und ausgelesenen Signale werden erfindungsgemäss an einen externen Server weitergeleitet. Gemäss einer besonders bevorzugten Ausführungsform der vorliegenden Erfindung erfolgt die Datenübertragung ausschliesslich in eine Richtung, von der Sensoreinheit zum externen Server. Dadurch wird die Datensicherheit erheblich vergrössert. Da die Sensoreinheit ausschliesslich Signale aus den Sensoren erhält, werden keine sensitiven Daten betreffend den sonstigen Betrieb der Vorrichtung übertragen. Umgekehrt ist es nicht möglich, über die Sensoreinheit sensitive Daten zu extrahieren, welche auf dem externen Server vorhanden sind.

Erfindungsgemäss wird unter einem externen Server ein Server verstanden, der sich nicht am Ort der Vorrichtung befindet. Erfindungsgemäss befindet sich der Server nicht in der Fabrikanlage, in welcher die Vorrichtung steht, sondern in einem Gebäude ausserhalb der Fabrikanlage.

Erfindungsgemäss besonders bevorzugt befindet sich der externe Server bei einem Dienstleister, der für die Optimierung der Produktionssicherheit der Vorrichtung verantwortlich ist. Idealerweise liefert dieser Dienstleister auch die erforderlichen Reinigungsmittel und/oder Additive zur zu überwachenden Vorrichtung.

Mit der bevorzugten Ausführungsform der Positionierung des externen Servers bei einem Dienstleister, der idealerweise auch die erforderlichen Reinigungsmittel und/oder Additive zur zu überwachenden Vorrichtung liefert, sind mehrere signifikante Vorteile verbunden.

Der Dienstleister kann mit dem Server mehrere Vorrichtungen gleichzeitig überwachen. Die zur Optimierung der Produktionssicherheit erforderliche Hardware muss also nur einmal beim Dienstleister bereitgestellt werden; die Kosten können auf alle Benutzer aufgeteilt werden. Auch ist der zur Bedienung erforderliche Personalaufwand geringer, wenn nur ein externer Server (oder wenige externe Server) beim Dienstleister bereitgestellt werden muss.

Neben diesen Synergieeffekten ist es ein erheblicher Vorteil, dass beim Dienstleister Personen mit der Bedienung des Verfahrens betraut sind, die auf dem entsprechenden Gebiet über eine hohe Expertise, Know-How und Routine verfügen. Dadurch wird ein reibungsloser Betrieb gewährleistet. Dieses Niveau kann allenfalls durch aufwendige Ausbildung einer oder mehrerer Personen am Ort der Vorrichtung erreicht werden, was wiederum ökonomisch nachteilig wäre.

Erfindungsgemäss bevorzugt ist der externe Server in Form einer Server-Client-Architektur ausgestaltet. Dies bedeutet, dass die Aufgaben innerhalb eines Netzwerks derart verteilt werden, dass ein oder mehrere Clients (Programme, welche sich auf demselben Rechner oder auf unterschiedlichen Rechnern befinden können, und welche sich üblicherweise auf einem anderen Rechner als der Server befinden), Aufgaben (Dienste) von einem Server anfordern und ausführen. Ein Server kann hierbei mit mehreren Clients zusammengefügt sein. Beispielsweise kann auf dem Server eine Datenbank bereitgestellt sein, auf welche mehrere Clients Zugriff haben. Eine Server-Client-Architektur ist hinlänglich bekannt und muss hier nicht weiter erläutert werden.

Die Verwendung einer Server-Client-Architektur erhöht ebenfalls die Datensicherheit. Die Clients können nur spezifische Anfragen an den Server richten, diesen aber nicht beeinflussen und keine Aufgaben-unabhängige Informationen vom Server erhalten. Für jeden Anwender kann ein separater Client entsprechend seinen spezifischen Anforderungen eingerichtet werden. Erfindungsgemäss bevorzugt können somit mit dem externen Server mehrere Vorrichtungen gleichzeitig überwacht werden.

Gemäss einer bevorzugten Ausführungsform der vorliegenden Erfindung werden auf dem externen Server sogenannte "softsensors" ausgeführt. Es handelt sich hierbei um einen Algorithmus zur Abschätzung eines Wertes, der durch herkömmliche Sensoren nicht einfach detektiert werden kann. Der Softsensor verwendet die von den vorstehend beschriebenen Sensoren erhoben Daten, um daraus einen Näherungswert für den nicht einfach zu bestimmenden Parameter zu ermitteln. Mit anderen Worten führt der Softsensor eine anspruchsvolle Extraktion von Mustern aus, die in den erhobenen Daten verborgen sind. Beispiele für durch herkömmliche Sensoren nicht einfach detektierbare Parameter sind Massenkonzentration, Produktkonzentration, Wachstumsraten von Biomassen, sowie Druck- und Strömungsbedingungen.

Es ist ein wesentlicher Vorteil dieser bevorzugten Ausführungsform der Positionierung des externen Servers bei einem Dienstleister, der idealerweise auch die erforderlichen Reinigungsmittel und/oder Additive zur zu überwachenden Vorrichtung liefert, dass auf dem externen Server leistungsstarke Programme des Dienstleisters laufen, welche sinnvolle Beziehungen und Kriterien aus den erhobenen Daten extrahieren und zur Optimierung der Produktionssicherheitder entsprechenden Vorrichtung verwenden können.

Ein weiterer Vorteil dieser bevorzugten Ausführungsform besteht darin, dass bei Positionierung des externen Servers bei einem Dienstleister, der auch die erforderlichen Reinigungsmittel und/oder Additive zur zu überwachenden Vorrichtung liefert, Bedarf an einem oder mehreren Reinigungsmitteln und/oder Additiven durch den Server erkannt und direkt zu den entsprechenden Bereichen beim Dienstleister übermittelt werden kann, wo die benötigten Materialien zeitnah bereitgestellt werden können. Aufwendige und zeitkostende Bestellvorgänge können damit entfallen.

Je nachdem, ob ein Bedarf für die Zugabe eines Reinigungsmittels und/oder Additivs ermittelt wurde, schliesst sich gegebenenfalls ein Schritt der Ausführung einer Aktion auf der Basis der vorstehenden Auswertung an.

Erfindungsgemäss bevorzugt ist, dass als Aktion mindestens ein Additiv in die Vorrichtung eingeführt wird.

Gemäss einer alternativen Ausführungsform wird in diesem Schritt mindestens ein Additiv in ein Reinigungsmittel (worunter auch die Grundkomponenten Säure oder Lauge zu verstehen sind) gegeben und das so modifizierte Reinigungsmittel anschliessend in die Vorrichtung eingeführt. Hierbei ist bevorzugt, dass die Modifizierung des Reinigungsmittels vor Ort und situativ an der Vorrichtung durchgeführt wird.

Reinigungsmittel für die erfindungsgemässen Zwecke sind hinlänglich bekannt und kommerziell erhältlich. Beispielhaft sei auf die Reinigungsmittel der Firma Halag Chemie AG verwiesen, bei denen sich um speziell vorformulierte, an besondere Aufgabenstellungen angepasste Reinigungsmittel (beispielsweise Reinigungsmittel für die Milchverarbeitung) oder auch um einzelne Reinigungssubstanzen handeln kann. Dem Fachmann ist bekannt, welche Reinigungsmittel für welchen Einsatz geeignet sind.

Bei den Additiven handelt es sich ebenfalls um hinlänglich bekannte und kommerziell erhältliche Substanzen. Beispielhaft sei auf das entsprechende Produktsortiment der Firma Halag Chemie AG verwiesen.

Gemäss einer bevorzugten Ausführungsform der vorliegenden Erfindung ist das Additiv ausgewählt aus der Gruppe bestehend aus Laugen, Säuren, oberflächenaktiven Substanzen, Enzymen, Komplexbildnern, Inhibitoren und Desinfektionsmitteln. Diese Substanzen sind dem Fachmann hinlänglich bekannt und kommerziell erhältlich.

Beispiele für verwendbare Laugen sind Natronlauge (NaOH) und Kalilauge (KOH).

Beispiele für verwendbare Säuren sind Phosphorsäure (H₃PO₄) und Salpetersäure (HNO₃).

Beispiele für verwendbare oberflächenaktive Substanzen sind lineare Alkylbenzolsulfonate.

Beispiele für verwendbare Enzyme sind Proteasen, Lipasen und Laktasen.

Ein Beispiel für einen verwendbaren Komplexbildner ist Trilon^{®} A der BASF AG.

Ein Beispiel für ein verwendbares Desinfektionsmittel ist Natriumhypochlorit (NaOCl).

Erfindungsgemäss bevorzugt ist am Ort der überwachten Vorrichtung ein Vorrat an benötigten Reinigungsmitteln und/oder Additiven bereitgestellt, beispielsweise in Tanks oder anderen Behältern (beispielsweise Kunststoffkanistern). Wie vorstehend beschrieben wird dieser Vorrat durch Lieferung der entsprechenden Reinigungsmittel und/oder Additive rechtzeitig aufgestockt, wenn während dem erfindungsgemässen Verfahren ein entsprechender Bedarf erkannt wird.

Die Reinigungsmittel und/oder Additive können manuell in einen Einlass der überwachten Vorrichtung gegeben werden, sobald vom externen Server eine Anweisung erhalten wird, ein bestimmtes Reinigungsmittel und/oder Additiv zuzugeben.

Erfindungsgemäss bevorzugt erfolgt die Zugabe der Reinigungsmittel und/oder Additive in die überwachte Vorrichtung jedoch automatisch. Hierfür sind die entsprechenden Tanks oder Behälter mit Reinigungsmittel und/oder Additiven über Leitungen miteinander und mit einem Einlass der überwachten Vorrichtung verbunden. Die Verbindungsleitungen zwischen den Tanks oder Behältern sowie dem Einlass der überwachten Vorrichtung sind mit Schliessvorrichtungen (beispielsweise Ventilen) verbunden, sodass eine kontrollierte Zugabe der erforderlichen Reinigungsmittel und/oder Additive in den erforderlichen Mengen ermöglicht wird.

Erfindungsgemäss bevorzugt werden diese Schliessvorrichtungen durch Anweisungen gesteuert, welche vom externen Server auf Basis dessen Auswertung erstellt wurden.

Sofern eine entsprechende Anweisung vom externen Server ausgegeben wird, wird der normale Betrieb der Vorrichtung unterbrochen, die Vorrichtung wird entleert, und ein bestimmtes Reinigungsmittel oder mehrere bestimmte Reinigungsmittel werden in den angewiesenen Mengen in die überwachte Vorrichtung gegeben. Nach Durchführung der Reinigungsstufe wird der Betrieb der Vorrichtung wieder aufgenommen.

Es kann aber erforderlich sein, das Reinigungsmittel zu modifizieren, um eine Optimierung der Produktionssicherheit der Vorrichtung zu gewährleisten. In diesem Fall wird zunächst mindestens ein Additiv in ein Reinigungsmittel gegeben und das so modifizierte Reinigungsmittel anschliessend in die Vorrichtung eingeführt.

Auf diese Weise können die Reinigungsmittel flexibel und genau den Bedürfnissen entsprechend modifiziert werden. Durch kontrollierte Zugabe von beispielsweise vier verschiedenen Additiven zu einem Reinigungsmittel kann bereits eine Zahl von 15 unterschiedlich modifizierten Reinigungsmitteln erzeugt werden, wobei die Möglichkeit verschiedener Dosierungen der Additive noch nicht einmal berücksichtigt ist.

In die Vorrichtung werden dann genau die benötigten Substanzen eingeführt. Es erfolgt weder eine Unter- noch eine Überdosierung. Dies trägt erheblich zur Pflege der Membran bei.

Das erfindungsgemässe Verfahren wird kontinuierlich während des Betriebs der Vorrichtung durchgeführt, soweit die Überwachung der Vorrichtung betroffen ist. Auf diese Weise werden an den externen Server in Echtzeit aktuelle Parameter übergeben. Eine unmittelbare Aktion, beispielsweise ein separater Reinigungsschritt nach Entleerung der Vorrichtung, ist auf diese Weise möglich. Etwaige Probleme werden unmittelbar angegangen und behoben, bevor es zu grösseren Komplikationen kommen kann. Erfindungsgemäss kann dadurch erreicht werden, dass der Reinigungsprozess weniger Zeit beansprucht und somit mehr Produktionszeit zur Verfügung steht.

Es ist erfindungsgemäss insbesondere bevorzugt, dass eine Regelung des Betriebs der Vorrichtung durchgeführt wird. Während der kontinuierlichen Durchführung des erfindungsgemässen Verfahrens (d.h. der Überwachungsstufe) erhält der externe Server kontinuierlich Daten und löst basierend auf einer Datenanalyse wenn erforderlich eine Aktion aus. Beispielsweise wird der laufende Betrieb der Vorrichtung erforderlichenfalls unterbrochen, die Vorrichtung entleert und eine bestimmte Menge eines spezifisch modifizierten Reinigungsmittels zugegeben. Als Reaktion darauf ändern sich die nach erneutem Anfahren des Betriebs gemessenen Parameter. Dem externen Server wird somit unmittelbar mitgeteilt, ob und welchen Effekt die durchgeführte Aktion hat. Darauf basierend kann der externe Server analysieren, ob eine weitere Aktion erforderlich ist oder ob die durchgeführte Aktion den gewünschten Effekt erbracht hat.

Durch die Trennungseigenschaften der Membran werden neben der gewünschten Trennung der Rohstoffe (z.B. Magermilch), auch die Reinigungsmittel während der Reinigung aufgetrennt. Dieser unerwünschten, aber verfahrenstechnisch unvermeidbaren Konzentrationsveränderung der Reinigungschemie (der sog. Fraktionierung) kann durch das gezielte (aufgrund einer Vielzahl von Messwerten an individuell zu bestimmenden Punkten in der Membrananlage als bisher üblich) Zudosieren von Additiven entgegengetreten werden, um die erwartete Wirkung der Reinigungschemie zu gewährleisten.

Die vorliegende Erfindung wird nachstehend anhand von nicht einschränkenden Figuren und Beispielen erläutert. Es zeigen:
- Fig.1: eine schematische Darstellung einer membran-basierten Vorrichtung zur Filtration eines Mediums, welche mit Hilfe des erfindungsgemässen Verfahrens überwacht werden kann.
- Fig.2: eine schematische Darstellung einer Ausführungsform des erfindungsgemässen Verfahrens als Beispiel für das Zusammenwirken der für das beschriebene Verfahren massgeblichen Komponenten.
- Fig.3: eine schematische Darstellung eines aufgrund der ermittelten Daten erstelltes, individuellen Reinigungsverfahrens als Regelkreis
- Fig.4: eine graphische Darstellung der verbesserten Behebung von Fouling mit einer Ausführungsform des erfindungsgemässen Verfahrens
- Fig.5: eine schematische Darstellung, welche die situationsbezogene, mengen- und zeitindividuelle Zugabe von Additiven (Reinigungskomponenten) im laufenden Prozess, im Vergleich zur kontinuierlichen Dosierung eines vorkonfektionierten (Misch-)Reinigungsmittels aus eben diesen Einzelkomponenten darstellt.

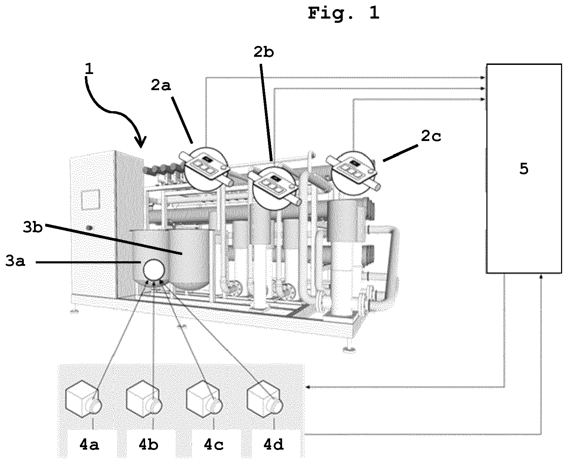

In Fig. 1 ist eine herkömmliche membran-basierte Vorrichtung (1) zur Filtration eines Mediums gezeigt. Auf Details dieser bekannten Vorrichtung wird nicht eingegangen.

An einer oder mehreren Positionen (2a, 2b, 2c) der Vorrichtung (1) sind Auslassvorrichtungen und Sensoreinheiten zur Entnahme von Proben des in der Vorrichtung (1) verarbeiteten Mediums bereitgestellt (d.h. es wird dort Medium entnommen und direkt in der Einheit analysiert, beispielsweise in Bezug auf den Leitwert, die Temperatur oder den pH-Wert). Die dort entnommenen Proben werden einer (nicht näher beschriebenen) Sensorschnittstelle zugeführt. Die von der Sensoreinheit ermittelten Daten werden an einen (nicht näher beschriebenen) externen Server (5) übermittelt, der die Daten wie vorstehend beschrieben analysiert. Durch das Resultat dieser Analyse wird festgelegt, ob Reinigungsmittel beziehungsweise Additiv (und falls ja, in welcher Kombination und Konzentration) in einer Reinigungsstufe nach Unterbrechung des laufenden Betriebs und Entleerung der Vorrichtung in die Vorrichtung (1) eingeleitet werden soll.

In Fig. 1 sind Tanks (3a, 3b) bereitgestellt, in welchen dasselbe oder unterschiedliche Reinigungsmittel bzw. Grundkomponenten (Säure/Lauge) gelagert sind und mit Hilfe von einer nicht näher beschriebenen Dosierschnittstelle in der vorgegebenen Menge in die Vorrichtung (1) eingeleitet werden können. Die Vorgabe erfolgt wie ausgeführt durch die Analyse der Daten durch den externen Server, kann aber vor Ort modifiziert werden. Alternativ kann auch vorgesehen sein, dass die Vorgaben des externen Servers vor Ort noch (durch Bedienungspersonal oder eine lokal installierte Software) bestätigt werden müssen.

In die Tanks (3a, 3b) oder in die Leitungen von den Tanks (3a, 3b) in die Vorrichtung (1) können Additive aus Dosiereinheiten (beispielsweise Dosierpumpen) (4a, 4b, 4c, 4d) eingeleitet werden, um modifizierte Reinigungsmittel herzustellen. Wie vorstehend erläutert wird durch die Datenanalyse auf dem externen Server ermittelt, ob und in welcher Menge Additive zuzugeben sind.

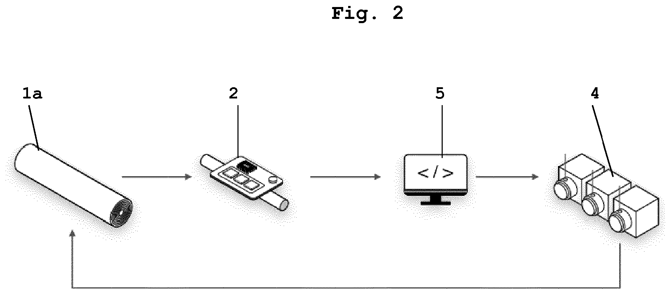

In Fig. 2 ist die Betriebsweise einer Ausführungsform des erfindungsgemässen Verfahrens gezeigt, in welcher ein Regelkreis verwirklicht ist. An anlagenspezifisch individuell zu definierender Position in einem Membransystem (1a), beispielsweise der ersten Filtrationsstufe, nahe eines Membranmoduls einer membran-basierte Vorrichtung (1) zur Filtration eines Mediums, wird in situ eine Probe entnommen und einer Auslassvorrichtung und Sensoreinheit (2) übergeben. In der/den Sensoreinheiten (2) wird ex situ mindestens eine Messung zur Bestimmung mindestens eines Parameters durchgeführt. Das Resultat hiervon wird an einen externen Server (5) übergeben. Dort wird eine Datenanalyse gemäss der vorstehenden Beschreibung durchgeführt. Auf der Basis dieser Datenanalyse wird der laufende Betrieb der Vorrichtung unterbrochen, die Vorrichtung entleert, und werden Reinigungsmittel/Additive wie vorstehend beschrieben durch Dosiereinheiten wie Dosierpumpen (4) dosiert und in das Membransystem (1a) eingeleitet. Dadurch kommt es zu einer Änderung der Verschmutzungssituation im Membransystem (1a), nämlich zu einer Instandhaltung der darin enthaltenen Membran(en). Das Resultat dieser Änderung wird beim nächsten Messzyklus ermittelt, welcher wieder mit einer Probenentnahme aus dem Membransystem (1a) beginnt. Auf diese Weise ist ein Regelkreis realisiert, mit dessen Hilfe die Instandhaltung des Membransystems(1a) zeitnah und präzise durchgeführt werden kann.

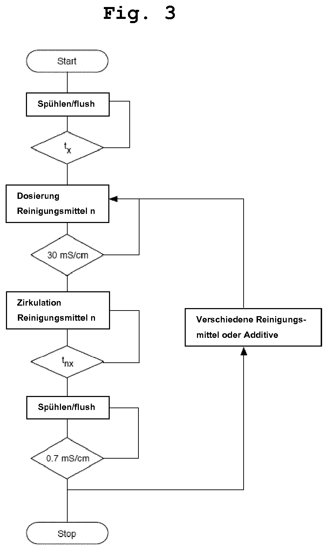

In Fig. 3 ist ein exemplarischer Reinigungsprozess unter Anwendung der erfindungsgemässen Verfahrensanpassung gezeigt. Der herkömmliche Reinigungsprozess (Start -> Spülen (Flush) für die Zeitdauer tₓ -> Dosierung des/der Reinigungsmittel(s) -> Soll-Konzentrationsbestimmung über beispielsweise den Leitwert in mS/cm -> Zirkulation des Reinigungsmediums für die Zeitdauer tₙₓ -> Ist-Konzentrationsbestimmung über beispielsweise den Leitwert in mS/cm -> Stop) wir hierin erfindungsgemäss mit dem Vergleich des Ist- und Soll-Konzentrationswert ergänzt. Aus dem Vergleich und bei Vorliegen eines die Prozesssicherheit oder das Reinigungsergebnis nicht erfüllenden Abweichung, erfolgt eine Zudosierung von Additiven über Dosiereinheiten (4), entweder in die Ansatzbehälter (Tanks) (3) oder direkt an entsprechenden Stellen in die Anlage (1).

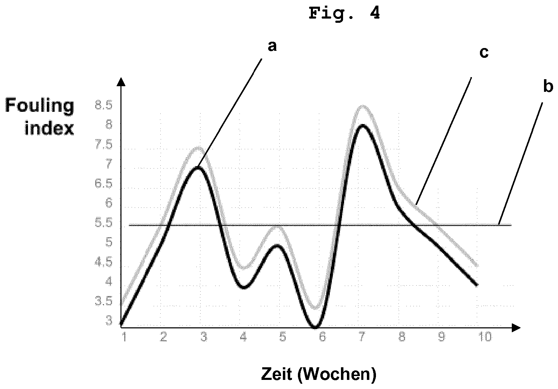

In Fig. 4 ist gezeigt, wie mit Hilfe der Ausführungsform von Fig. 2 eine verbesserte Instandhaltung eines Membransystems (5), beispielsweise einer membran-basierte Vorrichtung (1) zur Filtration eines Mediums, erreicht wird.

In dem Zeit-Fouling Index-Diagramm von Fig. 4 ist ersichtlich, dass sich der Verschmutzungsgrad, ausgedrückt durch den Fouling-Index, basierend auf individuell festzulegenden, Anlagen- und/ oder verfahrensspezifischen Parametern, entsprechend der dicken Kurve a über einen gewissen Zeitraum unregelmässig verändert.

Der Fouling Index wird je nach Membranfiltrationsanlage, dem angewendeten Trennungsverfahren sowie den zu trennenden Rohstoffen, situativ definiert. In Abhängigkeit des zu trennenden Rohstoffs kann z.B. die Fett oder Proteinbelastung der Membranen als Kenngrösse dienen. Generell sind jedoch die erfassten Messdaten des Leitwerts, der Temperatur, des pH-Wertes und der Durchfluss durch die Membrananlage die geeigneten Kenngrössen um den Fouling Index als Bezugsgrösse zu definieren.

Bei herkömmlichen Reinigungsprozessen (CIP-Verfahren) wird in einem Reinigungsprozess eine bestimmte, nicht variable, festgelegte Menge an Reinigungsmittel/Additiven zugegeben, wie durch die dünne Linie b gekennzeichnet. Da diese Zugabe unabhängig vom tatsächlichen Verschmutzungsgrad der Membran erfolgt, kommt es in bestimmten Zeitintervallen zu einer Unterdosierung oder Überdosierung der Reinigungsmittel/Additive. Dies ist ineffizient und zudem belastend für die Membran.

Erfindungsgemäss wird durch den in Fig. 2 beschriebenen Regelkreis zu jedem Zeitpunkt eine Menge an Reinigungsmittel/Additiven (Kurve c) zugegeben, welche dem tatsächlichen Verschmutzungsgrad (Kurve a) der Membran entspricht. Diese situationsbezogene, variable Zugabe von Reinigungsmittelkomponenten ermöglicht eine Reinigung der Membrananlage, die gegenüber der Zugabe konfektionierter Reiniger in statischer Konzentration/Menge, viel effizienter und schonender für die Membran(en), und somit die Produktsicherheit und Anlageneffizienz ist.

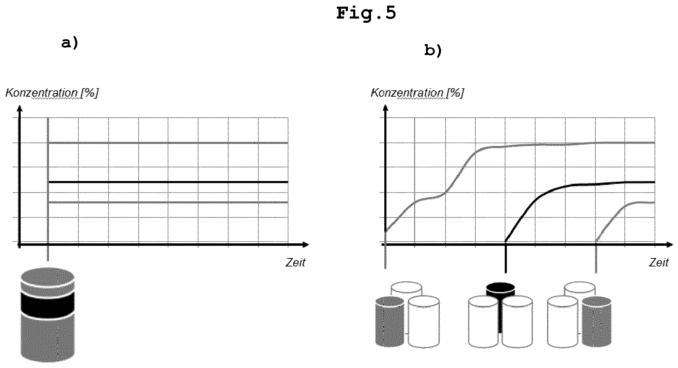

In Fig.5 ist eine schematische Darstellung gezeigt, welche die situationsbezogene, mengen- und zeitindividuelle Zugabe von Additiven (Reinigungskomponenten) im laufenden Prozess (b), im Vergleich zur kontinuierlichen Dosierung eines vorkonfektionierten (Misch-)Reinigungsmittels aus eben diesen Einzelkomponenten (a)) darstellt. Es ist zu erkennen, dass erfindungsgemäss die Reinigungsmittel komponenten (Additive) individuell voneinander und situationsbezogen in der optimalen Menge zudosiert werden. Eine nachteilige Über- oder Unterdosierung eines oder mehrerer Komponenten, die bei einem konfektionierten Reiniger als vorgefertigte Mischung der Komponenten unvermeidbar ist, wird durch den erfindungsgemässen Einsatz von situativ dosierten Additiven vermieden.

## Patentansprüche

1. Verfahren zur Optimierung der Produktionssicherheit einer membran-basierten Vorrichtung zur Filtration eines Mediums zur Herstellung von Milchprodukten, wobei das Medium ein Rohprodukt ist, aus welchem das Milchprodukt erhalten wird, umfassend die Schritte:
a) Entnahme einer Probe des in der Vorrichtung befindlichen Mediums zur Herstellung von Milchprodukten wie Milch, Quark, Käse, Joghurt, Hüttenkäse, Ricotta, Milchprotein, Milchprotein-Hydrolysat, Milchprotein-Konzentrat, Molkeprotein, oder Lactoseprotein, wobei das Milchprodukt durch Auftrennung des Mediums erhalten wird;
b) Bestimmung mindestens eines für die Optimierung der Produktionssicherheit der Vorrichtung wesentlichen Parameters;
c) Übermittlung der in Schritt b) erhaltenen Ergebnisse an einen externen Server, welcher in einem Gebäude ausserhalb der Fabrikanlage, in welcher die Vorrichtung steht, positioniert ist;
d) Auswertung der Ergebnisse durch den externen Server;
e) Gegebenenfalls Ausführung einer Aktion auf der Basis der Auswertung in Schritt d), wobei das Verfahren kontinuierlich während des Betriebs der Vorrichtung durchgeführt wird und im Fall einer Aktion der Betrieb unterbrochen, die Vorrichtung entleert und die Aktion durchgeführt wird, wobei die Aktion umfasst, dass mindestens ein Additiv in die Vorrichtung eingeführt wird.

2. Verfahren nach Anspruch 1, **dadurch gekennzeichnet, dass** die Probe in Schritt a) in situ entnommen wird.

3. Verfahren nach Anspruch 1 oder 2, **dadurch gekennzeichnet, dass** Schritt b) mittels einer ausserhalb der Vorrichtung befindlichen Sensoreinheit durchgeführt wird.

4. Verfahren nach einem der vorhergehenden Ansprüche 1 bis 3, **dadurch gekennzeichnet, dass** in Schritt e) mindestens ein Additiv in ein Reinigungsmittel gegeben und das so modifizierte Reinigungsmittel anschliessend in die Vorrichtung eingeführt wird.

5. Verfahren nach Anspruch 3 oder 4, **dadurch gekennzeichnet, dass** das mindestens eine Additiv ausgewählt ist aus der Gruppe bestehend aus Laugen, Säuren, oberflächenaktiven Substanzen, Enzymen, Komplexbildnern und Desinfektionsmitteln.

6. Verfahren nach Anspruch 4 oder 5, **dadurch gekennzeichnet, dass** die Modifizierung des Reinigungsmittels vor Ort an der Vorrichtung durchgeführt wird.

7. Verfahren nach Anspruch 1, **dadurch gekennzeichnet, dass** eine Regelung des Betriebs der Vorrichtung durchgeführt wird.

## Claims

1. A method for optimizing the production safety of a membrane-based device for the filtration of a medium for the production of dairy products, the medium being a raw product from which the dairy product is obtained, comprising the steps of:
a) taking a sample of the medium that is present in the device for the production of dairy products such as milk, curd, cheese, yogurt, cottage cheese, ricotta, milk protein, milk protein hydrolysate, milk protein concentrate, whey protein, or lactose protein, wherein the dairy product is obtained by separating the medium;
b) determining at least one parameter essential for optimizing the production safety of the device;
c) transmitting the results obtained in step b) to an external server positioned in a building outside the factory facility where the device is located;
d) evaluating the results by the external server;
e) If applicable, performing an action based on the evaluation in step d), wherein the method is performed continuously during operation of the device, and in the case of an action, the operation is interrupted, the device is emptied, and the action is performed, wherein the action comprises introducing at least one additive into the device.

2. The method according to claim 1, **characterized in that** the sample is taken in situ in step a).

3. The method according to claim 1 or 2, **characterized in that** step b) is carried out by means of a sensor unit located outside the device.

4. The method according to any one of the preceding claims 1 to 3, **characterized in that** in step e) at least one additive is added to a cleaning agent and the cleaning agent thus modified is subsequently introduced into the device.

5. The method according to claim 3 or 4, **characterized in that** the at least one additive is selected from the group consisting of alkalis, acids, surfactants, enzymes, complexing agents and disinfectants.

6. The method according to claim 4 or 5, **characterized in that** the modification of the cleaning agent is carried out on site at the device.

7. The method according to claim 1, **characterized in that** a control of the operation of the device is performed.

## Revendications

1. Procédé pour optimiser la sécurité de production d'un dispositif à base de membrane pour la filtration d'un milieu pour la fabrication de produits laitiers, le milieu étant un produit brut à partir duquel le produit laitier est obtenu, comprenant les étapes
a) prélèvement d'un échantillon du milieu présent dans le dispositif pour la fabrication de produits laitiers tels que du lait, du fromage blanc, du fromage, du yaourt, du fromage cottage, de la ricotta, des protéines de lait, de l'hydrolysat de protéines de lait, du concentré de protéines de lait, des protéines de lactosérum, ou des protéines de lactose, le produit laitier étant obtenu par séparation du milieu;
b) détermination d'au moins un paramètre essentiel pour l'optimisation de la sécurité de production du dispositif;
c) transmission des résultats obtenus à l'étape b) à un serveur externe positionné dans un bâtiment à l'extérieur de l'usine où se trouve le dispositif;
d) Evaluation des résultats par le serveur externe ;
e) le cas échéant, exécuter une action sur la base de l'évaluation à l'étape d), le procédé étant exécuté en continu pendant le fonctionnement du dispositif et, dans le cas d'une action, interrompre le fonctionnement, vider le dispositif et exécuter l'action, l'action comprenant l'introduction d'au moins un additif dans le dispositif.

2. Procédé selon la revendication 1, **caractérisé en ce que** l'échantillon est prélevé in situ à l'étape a).

3. Procédé selon la revendication 1 ou 2, **caractérisé en ce que** l'étape b) est réalisée au moyen d'une unité de détection située à l'extérieur du dispositif.

4. Procédé selon l'une quelconque des revendications précédentes 1 à 3, **caractérisé en ce que**, à l'étape e), au moins un additif est ajouté à un agent de nettoyage et l'agent de nettoyage ainsi modifié est ensuite introduit dans le dispositif.

5. Procédé selon la revendication 3 ou 4, **caractérisé en ce que** ledit au moins un additif est choisi dans le groupe constitué par les bases, les acides, les agents tensioactifs, les enzymes, les agents complexants et les désinfectants.

6. Procédé selon la revendication 4 ou 5, **caractérisé en ce que** la modification de l'agent de nettoyage est effectuée sur place, sur le dispositif.

7. Procédé selon la revendication 1, **caractérisé en ce qu'**une régulation du fonctionnement du dispositif est effectuée.
